# EUROPEAN PATENT APPLICATION

(11) **EP 4 740 752 A1**
(43) Date of publication of application: **13.05.2026**
(21) Application number: 25215088.3
(22) Date of filing: 11.11.2025
(51) Int. Cl.: A23L 33/105, B01D 11/02, B01J 19/10

(54) **METHOD FOR EXTRACTING TANNINS FROM GRAPE SEEDS AND PLANT FOR THE IMPLEMENTATION OF THIS METHOD**

(30) Priority: 12.11.2024 IT 202400025395
(71) Applicant: Ecotecne S.r.l., 31030 Altivole TV (IT)
(72) Inventor: MARTINI, Bruno, 31100 Treviso TV (IT)
(74) Representative: De Sandre, Emanuele

(57) **Abstract**

The present invention relates to a method for extracting tannins from grape seeds, characterized in that it comprises a phase in which a fluid mass containing grape seeds passes through an ultrasonic tube, passing through said ultrasonic tube. Said ultrasonic tube is connected to ultrasonic generators so as to transmit the ultrasound generated by said ultrasonic generators to said fluid mass containing grape seeds. Said ultrasonic generators are arranged outside said ultrasonic tube.

## Description

### Technical field

The present invention relates to a method for extracting tannins from grape seeds and a plant for implementing this method.

### Background

Grape seeds are the seeds of grape berries, wherein a grape berry comprises skin, pulp and seeds.

The fundamental feature of grape seeds is their high content of polyphenols and oils. This peculiarity makes grape seeds a valuable source for the production of antioxidants with a high content of polyphenols and edible oils (grape seed oil). Grape seeds are also used in the wine production process as, together with the skins, they are responsible for the release of polyphenols with organoleptic and sensory functions.

The best known and most highly regarded polyphenol, also for its effectiveness and relevance in the organoleptic properties and colour of red wine, is undoubtedly tannin, an element found in grape skins, seeds and stems. However, grape seeds are often a source of bitter and aggressive tannins and, depending on the vintage and grape variety, are a variable that must be considered with great care.

In traditional fermenters, the mechanical action and washing away of the pump-overs, combined with the action of temperature and alcohol, dissolve the protective cuticle present in the grape seeds, causing the substances contained in them to pass into the must-wine.

Immature grape seeds (which in many vintages can represent significant quantities) will transfer their tannic, bitter and aggressive properties to the product, resulting in wines that are inelegant, rough, with herbaceous notes and, above all, wines that require much more refinement, with increased costs and delays in sale.

To improve the quality of a wine in production, the grape seeds are sometimes removed, resulting in processing waste.

However, pomace and, above all, grape seeds contain beneficial substances of great biomedical interest.

In particular, pomace contains polyphenolic antioxidant molecules belonging to the families of anthocyanins, anthocyanidins, flavones, flavans, stilbenes, phenolic acids, etc.

These molecules are all natural antioxidants, such as catechins, rutin, epicatechins, chlorogenic acids, quercetin and resveratrol, which are particularly important for the prevention of myocardial infarction, diabetes, ageing, senile dementia, cancer and more.

There is therefore an increasing need to make the most of grape seeds for all their beneficial properties.

For this reason, for example, grape seeds can be extracted in the desired quantity from the must during the vinification phase, allowing the oenologist or cellar master to extract the desired quantity of grape seeds during vinification by performing appropriate 'pumping over', with all the known advantages inherent in this type of operation, such as the elimination of unripe grape seeds and the elimination of excess grape seeds.

A specific oil can also be extracted from the grape seeds; the process of separating the grape seeds for this purpose may involve separating the grape seeds from the pomace.

Furthermore, the waste generated during processing could be used to make other products, such as flour.

To date, therefore, grape seeds discarded from winemaking processes are used in areas far removed from the field of oenology.

### Summary of the invention

The technical problem posed and solved by the present invention is therefore to develop a method for extracting tannins from grape seeds.

In particular, one aim of the invention is to develop a plant for extracting tannins from grape seeds, specifically a plant capable of implementing an extraction method according to the present invention.

Another purpose of the present invention is to develop a method for extracting tannins from grape seeds that is external and independent of a winemaking process from which the grape seeds used have been extracted and discarded. Another purpose of the present invention is to develop a method that does not involve crushed grapes but only grape seeds.

Another purpose of the present invention is to develop a method and a plant for extracting tannins from grape seeds that operate with low energy consumption. This task and these purposes are achieved by a method for extracting tannins from grape seeds according to claim 1 and by a plant for extracting tannins from grape seeds according to claim 9.

Preferred features of the present invention are the subject of the respective dependent claims.

Further features and advantages of the invention will be apparent from the description of a preferred, but not exclusive, embodiment of the electric motor structure according to the invention, supported by the drawings provided for illustrative and non-limitative purposes in the attached tables and listed below.

### Brief description of the figures

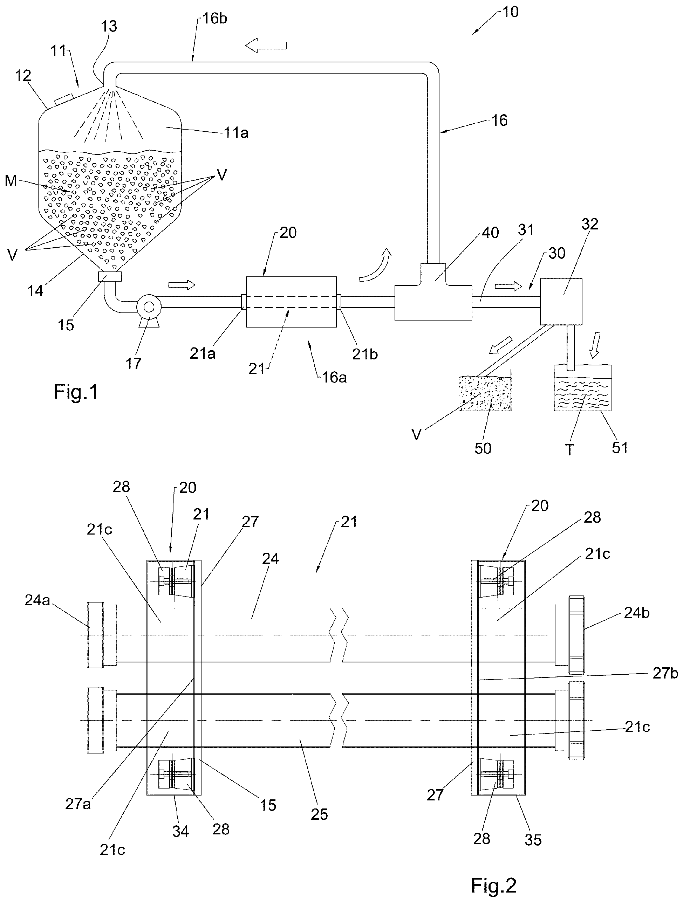

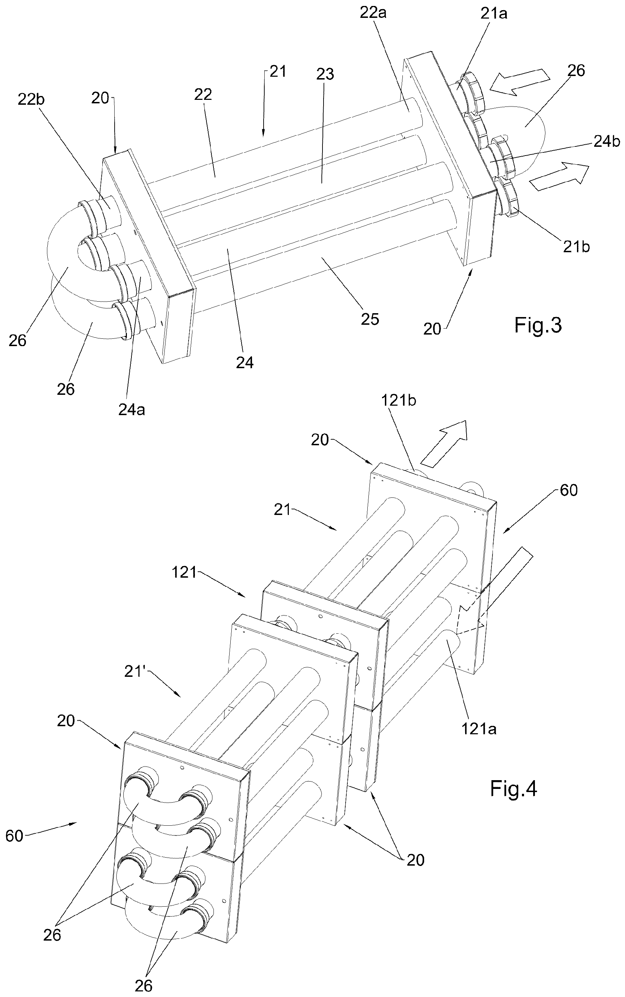

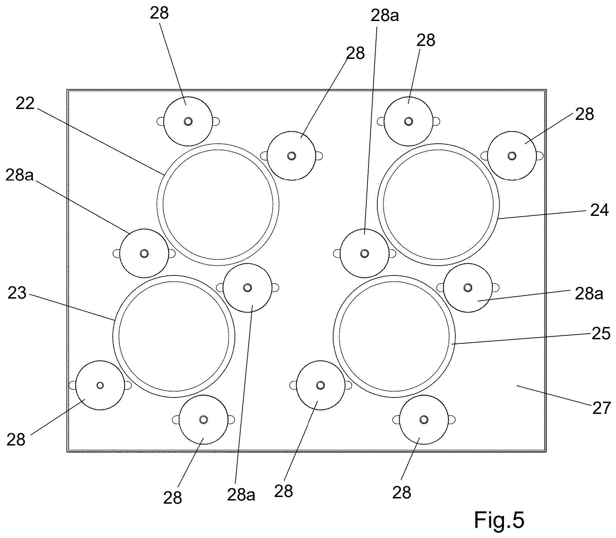

Reference will be made to the figures in the attached drawings, in which:
▪ Figure 1 represents a schematic view of a system according to the present invention for carrying out a method of extracting tannins from grape seeds, also according to the invention;
▪ Figure 2 shows a side sectional view of a detail of the plant according to the invention;
▪ Figure 3 shows a perspective view of the detail in Figure 2;
▪ Figure 4 shows a perspective view of a variant of the detail in Figure 2;
▪ Figure 5 shows a front view of another detail of the plant according to the invention.

The thicknesses and curvatures shown in the figures above are purely illustrative, are generally magnified and are not necessarily shown to scale.

### Detailed description of preferred embodiments

Various embodiments and variants of the invention will be described below with reference to the figures above.

Similar components are denoted in the various figures with the same reference number.

In the detailed description below, embodiments and variants additional to those already discussed in the description will be illustrated only insofar as they differ from what has already been described.

Furthermore, the various embodiments and variants described below may be used in combination, where compatible.

With initial reference to Figure 1, a method for extracting tannins from grape seeds according to the present invention is characterised in that it comprises a phase of transit of a fluid mass M comprising grape seeds V inside at least one ultrasonic conduit 21, with passage through said ultrasonic conduit 21.

This ultrasonic conduit 21 is connected to ultrasonic generating means 20 in such a way as to transmit the ultrasonic waves generated by said ultrasonic generating means 20 to said fluid mass M containing grape seeds V.

The ultrasound generating means 20 are arranged outside said at least one ultrasound conduit 21.

These ultrasound generating means 20 are arranged outside said at least one ultrasound conduit 21 so as not to be in direct contact with said fluid mass M containing grape seeds V.

The fluid mass M is intended to contain an aqueous liquid as a transport fluid in which the grape seeds V are immersed.

This liquid may be hydroalcoholic or simply aqueous.

This aqueous liquid is provided, for example but not exclusively, by the same fluid that comes out together with the grape seeds from a fermentation stage of a wine-making process; this waste liquid therefore consists essentially of a fraction of must; the fluid mass M is therefore a fluid coming from a process subsequent to, or from a stage subsequent to, a crushing process, and not from a crushing process.

Preferably, but not exclusively, the fluid mass M comprises 50% liquid and 50% grape seeds.

In general, the fluid mass M of the method according to the present invention may comprise between 10% and 50% grape seeds.

Typically, the crushed grapes used in winemaking methods contain 15-18% skins and 3-4% seeds.

It is clear that the present method is not a method for treating crushed grape for the production of wine.

The method according to the present invention involves the use of a single ultrasonic conduit 21, or several ultrasonic conduits 21 arranged in series; in an alternative embodiment of the invention, there are several ultrasonic conduits arranged in parallel, so that these ultrasonic conduits are crossed in parallel in the same direction of crossing.

The method according to the present invention comprises the following operational steps:
a) loading a fluid mass M comprising grape seeds V into a tank 11,
b) withdrawing said fluid mass M comprising grape seeds V from the collection bottom 14 of the tank 11 and pumping said fluid mass M containing grape seeds V into the ultrasonic conduit 21 so that the fluid mass M containing grape seeds V continuously passes said ultrasonic conduit 21 from the inlet 21a of said ultrasonic conduit 21 to the outlet 21b of said ultrasonic conduit 21,
c) subjecting said fluid mass M comprising grape seeds V to ultrasound determined by ultrasonic generating means 20, which ultrasound generating means 20 operate at frequencies between 18 kHz and 30 kHz, with a power between 5 W/litre and 2000 W/litre;
d) returning the fluid mass M comprising grape seeds V, exiting from said ultrasonic conduit 21, to the upper part 11a of said tank 11,
e) repeating steps b) to d), defining an extraction cycle, until the entire fluid mass M comprising grape seeds V is subjected to ultrasound inside said ultrasonic conduit 21 for a total period of time between 30 seconds and 30 minutes, preferably between 1 minute and 15 minutes.

Steps b) to d) are therefore to be understood as repeatable a number of times such as to subject the fluid mass M to the action of ultrasound inside the ultrasonic conduit 21 for a total time of between 30 seconds and 30 minutes, and more advantageously between 1 minute and 15 minutes.

The ultrasonic generating means 20 and the ultrasonic conduit 21 are configured and connected in such a way that the temperature of the fluid mass M comprising grape seeds V at the inlet 21a of said ultrasonic conduit 21 is substantially equal to the temperature of said fluid mass M comprising grape seeds V at the outlet of said ultrasonic duct 21.

Alternatively, the ultrasonic generating means 20 and the ultrasonic duct 21 are configured and connected such that a temperature difference of the fluid mass M comprising grape seeds V, between the outlet 21b of said ultrasonic duct 21 and the inlet 21a of said ultrasonic duct 21, is between 1°C and 45°C.

For example, and in particular, the ultrasonic generating means 20 and the ultrasonic conduit 21 are configured and connected such that the temperature difference of the fluid mass M comprising grape seeds V between the outlet 21b of said ultrasonic conduit 21 and the inlet 21a of said ultrasonic conduit 21 is approximately 0.3°C for a single passage through the ultrasonic conduit 21. The transit phase of the fluid mass M containing grape seeds V inside the ultrasonic conduit 21, with passage through the ultrasonic conduit, is therefore such that the temperature of the fluid mass M comprising grape seeds V at the inlet 21a of said ultrasonic conduit 21 is substantially equal to the temperature of said fluid mass M comprising grape seeds V at the outlet 21b of said ultrasonic conduit 21, or increases by a temperature Delta of between 1°C and 45°C.

In summary, and preferably, the temperature difference of the fluid mass M comprising grape seeds V between the beginning and end of a treatment received using the method according to the invention is less than or equal to 1°C.

Thanks to this precaution, none of the substances present in the fluid mass M are altered by a change in temperature, since there is no substantial change in temperature in the fluid mass M passing through the ultrasonic conduit 21.

The ultrasound generating means 20 comprise one or more ultrasonic vibration generators 28.

In particular, in this example of the invention, the ultrasound generating means 20 comprise a plurality of ultrasonic vibration generators 28.

More specifically, these ultrasonic vibration generators 28 each consist of a piezoelectric or magnetostrictive ultrasonic transducer.

The method according to the present invention provides that, after phase e) comprising the extraction cycles, the fluid mass M comprising grape seeds V is filtered in order to separate the exhausted grape seeds V from a wine fluid T with a very high tannin content.

The invention also relates to a plant 10 for the extraction of tannins from grape seeds, and in particular a plant for implementing a method according to the invention as described above.

This plant 10, clearly illustrated in Figure 1, comprises:
- a tank 11 for containing a fluid mass M containing grape seeds V; this tank 11 in turn comprises:
   - a lid 12, having a loading mouth 13,
   - a collection bottom 14, having a discharge mouth 15;
- a recirculation line 16 for the transit of said fluid mass M; this recirculation line 16 extends between the discharge mouth 15 and the loading mouth 13.

The recirculation line 16 comprises:
- at least one ultrasonic duct 21 having an inlet 21a and an outlet 21b, configured and positioned so as to be traversed internally by said fluid mass M,
- ultrasonic generating means 20 connected to the at least one ultrasonic duct 21, said ultrasonic generating means 20 being configured so as to transmit ultrasonic waves to said fluid mass M containing grape seeds V which passes through said at least one ultrasonic duct 21;
- pumping means 17 configured to draw the fluid mass M from said discharge mouth 15, to induce the fluid mass M to pass through the at least one ultrasonic duct 21 and to move said fluid mass M, exiting from said at least one ultrasonic conduit 21, towards said loading mouth 13.

The plant 10 comprises a diverter valve 40 with at least three ways.

For example, but not exclusively, the diverter valve 40 is of the three-way type. This diverter valve 40 is configured to divert the fluid mass M containing grape seeds V from said recirculation line 16 to a separation line 30.

The separation line 30 is configured to remove said grape seeds V from said fluid mass M.

In particular, the separation line 30 comprises a discharge duct 31 configured to connect the at least three-way valve 40 with separation means 32.

These separation means 32 are configured to separate the grape seeds V from said fluid mass M and to collect a remaining wine mass T rich in tannins.

The grape seeds are collected in a first container 50, while the wine mass T is collected in a second container 51.

The separation means 32 consist, for example, of a vibrating sieve screening device.

Alternatively, the separation means consist of a plate filter.

Yet another alternative is for the separation means to consist of a tangential filter.

Other filtration systems for oenology, which are also known per se, are also to be understood as separators.

The pumping means 17 comprise, again by way of example and not exclusively, a piston pump.

Alternatively, the pumping means 17 comprise a single-screw pump, or a lobe pump, or a peristaltic pump, or in general another type of pump that does not cause fragmentation of the bodies contained in the pumped fluid.

The recirculation line 16 essentially comprises two branches:
- a first branch 16a defined between the discharge outlet 15 and the at least three-way valve 40,
- a second branch 16b defined between the at least three-way valve 40 and the inlet 13.

In this example, the vibration generating means 20, with the ultrasonic conduit 21, are positioned in the first branch 16a.

The pumping means 17 are arranged upstream of the ultrasonic conduit 21.

The three-way valve 40 is maintained in a recirculation configuration of the fluid mass M in the recirculation line 16 during the ultrasonic treatment of the same fluid mass M, and is switched to a discharge configuration when the ultrasonic treatment is completed, so as to connect the first branch 16a and the separation line 30.

In the embodiment of the plant 10 according to the present invention, the at least one ultrasonic conduit 21 comprises a single conduit.

In particular, this ultrasonic conduit 21 comprises a single conduit which in turn comprises a plurality of tubular sections placed side by side and connected in series.

More specifically, and by way of example, this ultrasonic conduit 21 comprises a single conduit which in turn comprises a plurality of tubular sections 22, 23, 24 and 25 placed side by side so as to be arranged with their respective longitudinal axes parallel to each other, and connected in series by means of curved sleeves 26.

The ultrasonic generating means 20 are connected to said at least one ultrasonic conduit 21 so as to allow the transmission to said fluid mass M of vibrations such as to cause the generation of ultrasonic cavitation in said fluid mass M containing grape seeds V.

In particular, in the present embodiment, the ultrasound generating means 20 comprise at least one support and transmission body 27 configured to support a plurality of ultrasonic vibration generators 28 for the vibration of said at least one ultrasonic conduit 21, each fixing portion 21c of said at least one ultrasonic conduit 21, which is fixed to a corresponding support and transmission body 27, being surrounded by at least two ultrasonic vibration generators 28.

These ultrasonic generating means 20 are well described in patent EP3612037B1 in the name of the same applicant.

More specifically, as shown in Figures 2 and 3, the ultrasonic duct 21 comprises at least two tubular sections 24, 25, and preferably four tubular sections 22, 23, 24 and 25, and said ultrasonic generator means 20 comprise two support bodies 27.

The four tubular sections 22, 23, 24, and 25, which are parallel and side by side, are fixed to the two support bodies 27.

Each tubular section 22, 23, 24 and 25 therefore has two fixing portions 21c, these fixing portions 21c being fixed to the support bodies 27.

Each fixing portion 21c is surrounded by at least two vibration generators 28, for example by four ultrasonic vibration generators 28.

For example, four generators 28 surround the fixing portion 21a of a tubular section 24 with a support and transmission body 27.

Each of the support and transmission bodies 27 therefore carries a number of vibration generators such that each fixing portion 21a passing through it is surrounded by four vibration generators as described above.

Each support and transmission body 27 consists of a metal plate with through holes shaped to be traversed by the tubular sections 22, 23, 24 and 25.

The tubular sections 22, 23, 24 and 25 are straight.

Each support and transmission body 27 is crossed by tubular sections 22, 23, 24 and 25 in a direction orthogonal to its position.

The ultrasonic vibration generators transmit vibrations to the support and transmission body 27, i.e. to the plate that carries them, and from the support and transmission body 27 these vibrations are propagated to the tubular sections 22, 23, 24, 25.

The tubular sections 22, 23, 24 and 25 are made of metal tubes.

The ultrasonic vibration generators emit vibrations mainly in a direction orthogonal to the plate that carries them, i.e. in a direction parallel to the axes of the tubular sections 22, 23, 24 and 25.

Thanks to this particular arrangement, the tubular sections 22, 23, 24 and 25 are subjected to
vibrations mainly in the axial direction, i.e. in the direction of their length; in this way, each tubular section 22, 23, 24 and 25 is subjected to a series of micrometric compressions-elongations in the axial direction, determined by the propagation of the vibrations emitted by the vibration generators; these vibrations in the axial direction cause corresponding vibrations in the radial direction, which propagate concentrically on each section of each tubular section, along the entire length of each tubular element.

Each support body 27 is fixed to the tubular sections 22, 23, 24 and 25 by welding.

This welding is preferably of the type with material added to both sides of the support and transmission body 27.

The tubular sections 22, 23, 24, 25 each consist of a metal tube having the same internal diameter as the others, so that two tubular sections connected in series do not cause any changes in section.

In this example, each support and transmission body 27 carries twelve ultrasonic vibration generators 28, as clearly shown in the front view of Figure 5.

Part of the ultrasonic vibration generators carried by a support body 27 cooperate to surround more than one fixing portion 21c of the tubular sections 22, 23, 24, 25; for example, as shown in Figure 3, the ultrasonic vibration generators 28a located in an intermediate zone between the two sections of tubular element 22 and 23 and 24 and 25 respectively, cooperate to surround both a first fixing portion 21c 24 25 of a tubular section 24 and a second fixing portion 21c of another adjacent tubular section 25.

Thanks to this positioning of the ultrasonic vibration generators on the respective support and transmission bodies, the action of the vibration generators is synergistic and allows savings in the use of two or more additional vibration generators.

The ultrasonic vibration generators carried by the same support body 27 are mounted on the same face of the support body 27 itself.

The ultrasonic vibration generators are fixed to their respective support bodies 27 and are excited in such a way that their action in the axial direction on the tubular sections 22, 23, 24, 25 is added together.

In the embodiment described here, the vibration generators are fixed to the respective support bodies 27 on two opposite faces, 27a and 27b respectively, as shown in Figure 2.

Each ultrasonic vibration generator 28, 28a consists of a sonotrode.

The ultrasonic vibration generators 28, 28a carried by the same support and transmission body 27 are enclosed within protective casings 34 and 35 respectively, to protect them from accidental contact, in particular with washing liquids and treated liquids.

The ends of each tubular section 22, 23, 24, 25 of an ultrasonic conduit 21, for example the ends 22a and 22b of a first tubular section 22 and the ends 24a and 24b of a second tubular section 24, can be connected to corresponding ends of the tubular sections of a second equal structure of apparatus 21', as exemplified in Figure 4.

An ultrasonic transmission module 60 is therefore defined, comprising:
- at least two parallel and adjacent tubular sections 22, 23, for example four tubular sections 22, 23, 24, 25, of an ultrasonic conduit 21,
- fixed to two support and transmission bodies 27,
where each fixing portion 21c of each tubular section 22 is surrounded by at least two ultrasonic vibration generators 28, 28a of the ultrasonic vibration generators supported by the support and transmission bodies 27.

The ultrasonic conduit 121, as exemplified in Figure 4, is composed of two or more modules 60 and has an inlet 121a and an outlet 121b.

The ultrasonic ducts 21 and 121 are therefore serpentine ducts.

The ultrasonic generating means 20 are configured in such a way that they operate simultaneously on all the tubular sections 22, 23, 24, 25 of which an ultrasonic duct 21, 121 is composed.

In this way, with a single passage through the ultrasonic conduit 21, 121, the fluid mass M containing grape seeds V is subjected to the action of ultrasound as many times as there are tubular sections 22, 23, 24, 25 comprising the ultrasonic conduit 21, 121.

The plant 10 according to the invention is therefore highly synergistic and relatively low in consumption, since the energy of each ultrasonic generator 28, 28a is distributed synergistically over the entire length of each of the side-by-side tubular sections 22, 23, 24, 25.

In particular, a module 60 as described above has a power consumption of approximately 0.09 watts/cm3.

Therefore, the method according to the present invention is also characterised by the fact that the power density of the ultrasound, which is transmitted by the ultrasonic generating means 20 to the fluid mass (M) passing through the ultrasonic duct 21, is approximately 0.09 W/cm3.

It is therefore understood how a method and a plant 10 for extracting tannins from grape seeds according to the present invention allow the intended task and purposes to be achieved.

In particular, the present invention has developed a method for extracting tannins from grape seeds that allows for the optimisation of the use of grape seeds discarded from winemaking processes, where these tannins, which are essential in red wines, for example, are extracted separately from the winemaking process from which they originate and remain available for possible future use.

This method and plant allow wine producers to independently extract tannins from waste material that they would otherwise be forced to purchase from outside the company.

The grape seeds thus become a secondary raw material; they are no longer disposed of immediately after removal from the winemaking process from which they originate, but are disposed of only after the method according to the present invention, at which point the grape seeds will weigh much less, with consequent further advantages in terms of disposal costs.

In other words, the plant according to the present invention comprises a recirculation circuit for treating a fluid mass containing grape seeds, which circuit comprises a tank for containing the fluid mass, ultrasound generating means applied to an ultrasonic conduit, a pump for defining the appropriate flow rate to pass through the ultrasonic conduit, and a separation line through which, at the end of the ultrasound treatment, the fluid mass is divided so as to separate the grape seeds on one side and a tannin-rich wine mass on the other. The tannin-rich wine mass is then sealed in special containers for future use as a tannin enricher in other winemaking processes.

The pumping means 17 may comprise a piston pump, as mentioned above, or a peristaltic pump.

These pumping means 17 have internal passages that may be enlarged to facilitate the passage of the fluid mass loaded with grape seeds.

By way of example, the method and apparatus according to the invention operate as described below.

In the presence of a 1000-litre tank 11 and an ultrasonic duct 21 with a total internal volume of 100 litres, in order to obtain an average treatment time of 3 minutes for the entire fluid mass M containing grape seeds V, the system 10 and the ultrasonic generators 20 must operate for 30 minutes, with a flow rate through the ultrasonic conduit of 100 I/min.

So if I have 1000 litres and the pipe is 100 litres, and the operator wants a 1-minute treatment, it will take a total of 10 minutes to pass 1000 litres through the 100-litre pipe. If I want a 10-minute treatment, I need 100 minutes for 1000 litres.

In tank 11, which has a conical bottom, the grape seeds are boiled using a gas, such as nitrogen.

The grape seeds V, as explained above, are in a fluid mass M, essentially must, and are subjected to ultrasonic treatment using piston pumps with enlarged passages or a single pump.

Therefore, with the present invention, a method has been developed for extracting tannins from grape seeds that is external and independent of a winemaking process from which the grape seeds used in the method according to the invention have been extracted and discarded.

Furthermore, the present invention has developed a method that does not involve crushed grapes, but only grape seeds discarded from a different and independent winemaking process.

Last but not least, the present invention has developed a method and a plant for extracting tannins from grape seeds that operate with low energy consumption. The present invention has been described above with reference to preferred embodiments. It is understood that other embodiments may exist that relate to the same inventive core, as defined by the scope of protection of the claims set out below.

## Claims

1. Method for extracting tannins from grape seeds, **characterised in that** it comprises a transit step of a fluid mass (M) comprising grape seeds (V) inside at least one ultrasonic duct (21), with crossing of said ultrasonic duct (21), said ultrasonic duct (21) being connected to ultrasonic generating means (20) in such a way as to transmit the ultrasounds generated by said ultrasonic generating means to said fluid mass (M) containing grape seeds (V), said ultrasonic generating means (20) being arranged outside of said at least one ultrasonic duct (21).

2. Method according to claim 1, **characterized in that** said fluid mass (M) comprises a liquid as the transport fluid in which the grape seeds (V) are immersed, said liquid being hydroalcoholic or aqueous.

3. Method according to one or more of the preceding claims, **characterized in that** said aqueous liquid consists of a waste liquid or fluid that exits together with the grape seeds from a fermentation phase of a winemaking process; said waste liquid consists substantially of a fraction of must.

4. Method according to one or more of the preceding claims, **characterized in that** said fluid mass M is between 10% and 50% grape seeds, and preferably comprises 50% liquid and 50% grape seeds.

5. Method according to claim 1, **characterized in that** it comprises the following operating steps:
a) loading a fluid mass (M) comprising grape seeds (V) into a tank (11),
b) withdrawing said fluid mass (M) comprising grape seeds (V) from a collection bottom (14) of said tank (11) and pumping said fluid mass (M) containing grape seeds (V) into said ultrasonic duct (21) so that said fluid mass (M) containing grape seeds (V) continuously passes through said ultrasonic duct (21) from the inlet (21a) of said ultrasonic duct (21) to the outlet (21b) of said ultrasonic duct (21),
c) subjecting said fluid mass (M) comprising grape seeds (V) to ultrasounds determined by ultrasonic generating means (20) operating at frequencies between 18 kHz and 30 kHz, with a power between 5 W/litre and 2000 W/litre;
d) return said fluid mass (M) comprising grape seeds (V), exiting from said ultrasonic duct (21), to the upper part (11a) of said tank (11),
e) repeat phases b) to d), defining an extraction cycle, until all the fluid mass (M) comprising grape seeds (V) is subjected to ultrasound inside said ultrasonic duct (21) for a total period of time between 30 seconds and 30 minutes.

6. Method according to one or more of the preceding claims, **characterized in that** said ultrasonic generator means (20) and the ultrasonic duct (21) are configured and connected in such a way that the temperature of the fluid mass (M) comprising grape seeds (V) at the inlet (21a) of said ultrasonic duct (21) is substantially equal to the temperature of said fluid mass (M) comprising grape seeds (V) at the outlet (21b) of said ultrasonic duct (21), or alternatively said ultrasonic generator means (20) and the ultrasonic duct (21) are configured and connected in such a way that a temperature difference of the fluid mass (M) comprising grape seeds (V) between the outlet (21b) of said ultrasonic duct (21) and the inlet (21a) of said ultrasonic duct (21) is between 1°C and 45°C.

7. Method according to one or more of the preceding claims, **characterized in that** said ultrasound generating means (20) comprise a plurality of ultrasonic transducers of the piezoelectric type, or of the magnetostrictive type.

8. Method according to one or more of the preceding claims, **characterized in that,** subsequently to said phase e) of extraction cycles, said fluid mass (M) comprising grape seeds (V) is filtered so as to separate the exhausted grape seeds (V) from a vinous fluid (T) with a very high tannin content.

9. Plant (10) for the extraction of tannins from grape seeds, **characterized in that it comprises:**
- a tank (11) for containing a fluid mass (M) containing grape seeds (V), said tank (11) comprising in turn:
- a lid (12), having a loading mouth (13),
- a collection bottom (14), having a discharge mouth (15);
- a recirculation line (16) for the transit of said fluid mass (M), said recirculation line (16) extending between said discharge mouth (15) and said loading mouth (13), said recirculation line (16) comprising:
- at least one ultrasonic duct (21) having an inlet mouth (21a) and an outlet mouth (21b), configured and positioned so as to be internally crossed by said fluid mass (M),
- ultrasonic generating means (20) connected to said at least one ultrasonic duct (21), said ultrasonic generating means (20) being configured so as to transmit ultrasound to said fluid mass (M) containing grape seeds (V) which passes through said at least one ultrasonic duct (21);
- pumping means (17) configured to withdraw said fluid mass (M) from said discharge mouth (15), to induce said fluid mass (M) to pass through said at least one ultrasonic duct (21) and to move said fluid mass (M), exiting from said at least one ultrasonic duct (21), towards said loading mouth (13).

10. Plant according to the preceding claim, **characterized in that** it comprises a diverter valve (40) with at least three ways, said diverter valve (40) being configured to divert said fluid mass (M) containing grape seeds (V) from said recirculation line (16) to a separation line (30), said separation line (30) being configured to remove said grape seeds (V) from said fluid mass (M).

11. Plant according to claim 9 or 10, **characterized in that** said ultrasonic generating means (20) are connected to said at least one ultrasonic duct (21) so as to allow the transmission to said fluid mass (M) of vibrations such as to determine the generation of ultrasonic cavitation in said fluid mass (M) containing grape seeds (V).

12. Plant according to one or more of claims 9 and 10, **characterised in that** said ultrasonic generating means (20) comprise at least one support and transmission body (27) configured to support a plurality of ultrasonic vibration generators (28) for the vibration of said at least one ultrasonic duct (21), each portion (21c) of said at least one ultrasonic duct (21), which is fixed to a corresponding support and transmission body (27), being surrounded by at least two ultrasonic vibration generators (26).

13. Plant according to one or more of claims 9 to 10, **characterised in that** said separation line (30) comprises a discharge duct (31) configured to connect said at least three-way valve (40) with separation means (32), said separation means (32) being configured to separate the grape seeds (V) from said fluid mass (M) and to collect a remaining vinous mass (T) rich in tannins.
